# EUROPEAN PATENT APPLICATION

(11) **EP 4 151 130 A1**
(43) Date of publication of application: **22.03.2023**
(21) Application number: 22195863.0
(22) Date of filing: 15.09.2022
(51) Int. Cl.: A47J 31/30

(54) **A MOKA-TYPE COFFEE MAKER FOR THE PREPARATION OF HOT BEVERAGES BY INFUSION OR PERCOLATION**

(30) Priority: 15.09.2021 IT 202100023783
(71) Applicant: Additive Appliances S.r.l., 10121 Torino (TO) (IT)
(72) Inventor: BECCUTI, Tommaso, Torino TO (IT)
(74) Representative: Rondano, Davide

(57) **Abstract**

A moka-type coffee maker (10) for the preparation of hot beverages by infusion or percolation is described, which comprises a boiler (12) having a chamber (12a) adapted to contain an infusion liquid to be heated, an infusion tank (14) adapted to receive a predetermined quantity of substance in powder form, and a collecting vessel (18) having a chamber (18a) adapted to receive the beverage that is produced by passing the heated infusion liquid through the substance in powder form. The boiler (12) is placed in fluid communication with the infusion tank (14) through a circuit (20) comprising a first circuit portion (20a), which is immersed in the chamber (12a) of the boiler (12) and carries associated pressure release valve means (30) adapted to open said first circuit portion (20a) upon reaching a predetermined pressure of the infusion liquid heated in the boiler (12), and a second circuit portion (20b), which is in fluid communication with said first circuit portion (20a) and is formed in a perimetral or circumferential wall (W) of the collecting vessel (18) which is in heat exchange relationship with the external environment. The coffee maker also comprises dosing means (50) adapted to dose a predetermined quantity of infusion liquid into the boiler (12), said dosing means (50) including a supply conduit (52) adapted to selectively put the chamber (18a) of the collecting vessel (18) into fluid communication with the chamber (12a) of the boiler (12), so as to selectively transfer the predetermined quantity of infusion liquid from the chamber (18a) of the collecting vessel (18) to the chamber (12a) of the boiler (12). The supply conduit (52) has an inlet opening (54) arranged in a bottom area of the chamber (18a) of the collecting vessel (18) and an outlet opening (56) communicating with the chamber (12a) of the boiler (12), said inlet and outlet openings (54, 56) being connected to each other by a siphon-shaped channel extending to a predetermined height with respect to the bottom of the chamber (18a) of the collecting vessel (18) so as to define the predetermined quantity of infusion liquid.

## Description

### Technical field of the invention

The present invention generally relates to household machines for preparing hot beverages by infusion or percolation, such as for example coffee machines or household coffee makers, and more specifically to a moka-type coffee maker.

### State of the art

Coffee and its preparation, particularly the preparation of the so-called Italian espresso, have been the subject of numerous and in-depth scientific studies, also due to the vast and growing diffusion of this beverage on a global scale. Today it is widely documented that the optimal extraction of espresso coffee is the result of various chemical-physical factors, among which the pressure and temperature of the infusion liquid (water), which must be 9 ± 2 bar and 90 ± 5 °C, respectively, are of primary importance.

Since their invention, at the dawn of the 20th century, the machines needed to obtain these performances were expensive and large, remaining the prerogative of professionals, bars and coffee shops. Traditional percolation systems, which are defined as thermos-mechanical systems, have provided an acceptable alternative for household consumers, as in the case - despite some evident process limitations - of the famous and internationally recognized pressurized coffee maker, the moka pot, invented by Alfonso Bialetti in 1933.

Navarini et Al., in "Experimental investigation of steam pressure coffee extraction in a stove-top coffee maker" [Elsevier, Applied Thermal Engineering 29 (2009)] have published a research in which they highlight that the thermo-mechanical operation of a traditional coffee maker causes the pressure and temperature values - which are crucial for the preparation of the coffee - to fall outside the standards recommended by literature. In particular, due to the pressurization that is established inside the boiler tank during the water heating phase, where the maximum pressure reached is about 2-2,5 bar, the boiling temperature of the liquid rises above 120°C. When the infusion takes place at these temperatures, the coffee can release substances that are organoleptically perceived as bitter and "burnt" notes that, in fact, often characterize the coffee prepared with the moka-type coffee maker. Although some measures during preparation (a precise dosage of water and coffee, the compaction of the ground coffee, the modulation of the energy supplied to the boiler tank) can help to improve the result - as is well known in the popular tradition of the countries where the coffee maker is most used - these measures alone cannot change the physics of the appliance. Moreover, the much-appreciated espresso cream is not produced by the moka-type coffee maker due to the same physical limitations. In fact, it is known that the cream or foam of the espresso coffee is formed, by pressurized percolation, only at pressure values of 7 bar or higher, therefore well above the operating values of the moka-type coffee maker.

Various attempts have been made to fix that problem. However, the increase in the boiling temperature as a function of pressure has made it impossible to achieve these values up to now. In fact, even though a valve was arranged upstream of the coffee tank with proper calibration values, for example 9 bar, the water would boil at temperatures above 175°C and, when released, would reach the coffee at temperatures that are certainly too high, thus leading to unpleasant extraction results. At the same time, the preparation of the coffee maker can be cumbersome, and the results not always consistent.

The development of electronics has radically changed the scenario. Introduced in the second half of the last century, thermoelectric (or electronic) household machines for the preparation of hot beverages have spread rapidly over the last few decades, also thanks to the advancement of technology that has made them more and more efficient and inexpensive. These include machines using portioned coffee (in pods or capsules). These latter are very easy to use and - hanks to the embedded electrical and electronic components - offer a more accurate process control. The performance improvement, particularly in the quality of the infusion, is a direct consequence of the optimization of the extraction process, which is the result of the integration of components capable of actively controlling the quantity, pressure and temperature of the water. In particular, the decoupling of the water heating (which can be carried out by induction or electrically) from the generation of pressure (typically obtained by means of a vibration pump) allows to achieve the performance required for preparing a decent coffee. Furthermore, most of electronic machines for the extraction of coffee which are on the market today offer the possibility to prepare the beverage starting from capsules or pods, which are characterized in that they contain pre-measured quantities of ground coffee and thus significantly simplify the beverage preparation process.

However, these machines involve higher costs not only for the consumer but also for the environment. Around 80 million thermoelectric coffee machines were sold worldwide in 2019 alone, resulting in the disposal of hundreds of millions of difficult-to-recycle components at the end of the operating life of these machines. Furthermore, to date, about 40 billion coffee capsules are produced worldwide each year, and only a fraction of them are compostable. In addition to of their not negligible environmental cost, the capsules are also much more expensive than traditional ground coffee - on average, by a factor of more than four.

Additionally, the overall size of the thermoelectric machines is larger than that of traditional infusion systems. In particular, the electronic components for the pressurization and temperature control of the water, or more generally of the infusion liquid, along with their central control system, have made it necessary to increase the overall size of the finished product. This can be both a problem of space occupation, particularly where the available space is limited, and a more general problem of portability of the device. Furthermore, the impact of these additional components is also tangible from a cost perspective, in terms of both direct and assembly costs.

Finally, although cheap and practical, the vibration pump used to pressurize the infusion liquid creates strong vibrations that stress the machine body, making the extraction process particularly noisy. Although tolerated, this characteristic is generally penalizing, particularly in some of the key moments of consumption of the beverage.

A coffee maker according to the preamble of independent claim 1 is known, for example, from WO2016/059426. A coffee maker of a similar type is known from WO2021/123765.

### Summary of the invention

The present invention aims at providing a satisfactory solution to the problems described above, avoiding the drawbacks of the prior art.

In particular, the invention aims at improving the performances of a moka-type coffee maker for the preparation of hot beverages by infusion or percolation, in particular by ensuring an accurate control of the thermodynamic balances of temperature and pressure.

Further objects of the invention are to offer an easier, faster and more accurate preparation and cleaning of such a coffee maker, as well as to make it possible to customize the functions or use modes of the coffee maker in its use for the preparation of a coffee-based beverage.

According to the present invention, these objects are achieved thanks to a moka-type coffee maker having the features of independent claim 1.

Particular embodiments of the coffee maker according to the present invention are defined in the dependent claims, the subject-matter of which is to be understood as an integral part of the following description.

In summary, the present invention is based on the principle of equipping a moka-type coffee maker with a cooling system for the infusion liquid, which is formed by a heat exchanging circuit with a complex geometry made as a single piece with the structure of the coffee maker, in particular with a wall of the collecting vessel that separates the chamber of this vessel from the external environment. The invention is further improved by the provision of dosing means arranged to easily and immediately dose the quantity of infusion liquid to obtain the beverage.

Recent studies and publications have shown that using 3D printing, or additive manufacturing, allows the creation of heat exchanging circuits with complex geometries showing superior thermos-mechanical performances. In particular, "Engineering Calculations for complex geometric domains" (MATEC Web Conference 157, 02009, published in 2018) demonstrates how geometric structures obtained from implicit functions, for example, the so-called TPMS (Triply Periodic Minimal Surface), like gyroid structures, offer high heat-dissipation performances per unit of volume. Given their complexity, many of these structures can only be produced using additive manufacturing technologies.

The present invention takes advantage of 3D printing's ability to create complex geometries to provide a cooling system for the infusion liquid including a high-efficiency heat exchanging circuit shaped according to a triply periodic minimal surface, which circuit is formed in the wall of the collecting vessel and is therefore conforming thereto. Such a complex-geometry heat exchanging circuit is able to intercept the heated infusion liquid on its way to the infusion tank, causing it to cool down in a controlled manner before reaching said tank. The high thermal dissipation caused by the complex-geometry heat exchanging circuit guarantees a substantial lowering of the temperature of the infusion liquid, opening the way to a high-pressure extraction even when the pressurization takes place by thermos-mechanical means, without the aid of control electronics, as in the traditional percolation systems of the moka-type coffee makers.

It is known, in fact, that the boiling point of water increases with increasing pressure. For example, a pressure of 9 bar corresponds to a water boiling temperature of about 175°C, which is almost twice the optimal infusion temperature of 90°C ± 5°C. Conveniently, the complex-geometry heat exchanging circuit, optimized and formed in one piece with the structure of the coffee maker, in particular with the wall of the collecting vessel, offers a total dissipative capacity capable of guaranteeing a reduction in the temperature of the infusion liquid consistent with the above-mentioned values.

Advantageously, both pressurization and temperature control can thus be obtained by simple thermos-mechanical action, which allows a moka-type coffee maker to achieve performances otherwise obtainable by more complex machines that take advantage of an electric vibration pump and any auxiliary circuits for electronically controlling the temperature, making them bulkier, more expensive and noisier.

As anticipated, the complex-geometry (high-efficiency) heat exchanging circuit is advantageously made using 3D printing or additive manufacturing technologies. Specifically, the heat exchanging circuit is formed in a wall of the collecting vessel of the coffee maker which separates the chamber of said vessel from the external environment and is therefore in a heat exchange relationship with the external environment. The heat exchanging circuit is thus adapted to conform to the geometries of the coffee maker, as well as to be functionally optimized (therefore, with a maximized total dissipative capacity per unit of volume) thanks to the complexity of the geometries that can be created. Even more advantageously, such a heat exchanging circuit does not occupy additional spaces in the coffee maker.

A further advantage is obtained by making the wall of the collecting vessel of the coffee maker in a heat exchange relationship with the external environment with a triply periodic minimal surface which opens to the external environment, thereby expanding its dissipation surface. However, due to the low convection coefficient expected on the external surface, since there is no forced convection of the external air (especially when operating in a closed environment), it must be pointed out that a significant part of the dissipative effect occurs by absorption, and is therefore related to the total mass of the heat exchanger.

The coffee maker can be configured to operate according to multiple beverage preparation functions, or use modes, by providing the possibility to control the operating pressure of the coffee maker by pressure release valve means, located upstream of the heat exchanging circuit and configured to allow the outflow of the infusion liquid from the boiler to the infusion tank upon reaching a predetermined pressure of the infusion liquid in the boiler. Advantageously, a set of pressure release valve means is provided, which are calibrated at different release pressures and can be easily replaced during the assembly operations of the coffee maker components, such as the boiler and the collecting vessel.

The possibility to configure the coffee maker to operate according to multiple use modes is also obtained through the provision of dosing means, which are also supplied in a set of dosing means arranged to feed different volumes of infusion liquid to the boiler and can be easily replaced during the assembly operations of the coffee maker components, such as the collecting vessel.

In conclusion, the invention allows to provide a moka-type coffee maker which is able to accurately control the thermodynamic balances of the infusion liquid even at high pressure and temperature values, such as those required to prepare an espresso coffee, and is also easily configurable in terms of dosage of the beverage quantity and type of beverage to be prepared, especially in the type of coffee-based beverage that can be obtained depending on the pressure at which the infusion takes place (for example, drip coffee, moka coffee, aeropress coffee, espresso coffee).

### Brief description of the drawings

Further features and advantages of the invention will result from the following detailed description, given purely by way of non-limiting example with reference to the attached drawings, where:
Figure 1 is a schematic representation of a moka-type coffee maker according to the present invention;
Figure 2 is a perspective view of an embodiment of the coffee maker of the invention;
Figure 3 is a partially exploded side elevation view of the coffee maker of Figure 2;
Figure 4 is an exploded side elevation view of the coffee maker of Figure 2;
Figure 5 is a partially sectioned perspective view of the coffee maker of Figure 2;
Figure 6 is a perspective view of some components of the coffee maker of Figure 2;
Figure 7 is a perspective view of other components of the coffee maker of Figure 2;
Figure 8 is a perspective view of a variant embodiment of a component of the coffee maker of Figure 2; and
   - Figures 9a-9f are partially sectioned perspective views of a part of the coffee maker of Figure 2, which represent a sequence of operational steps required to use the coffee maker.

### Detailed description

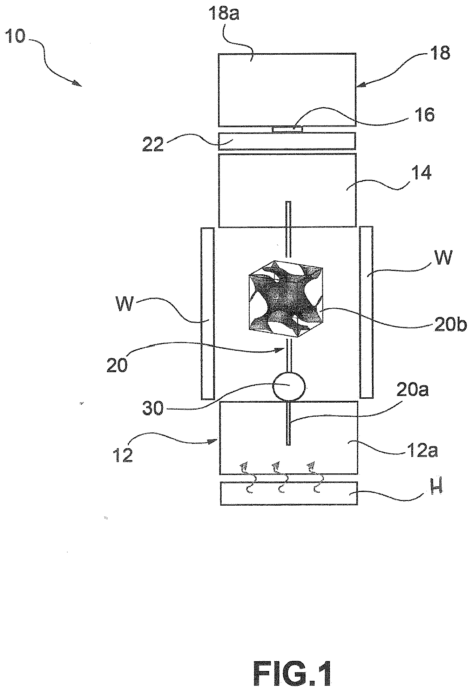

Figure 1 schematically shows a machine for the preparation of hot beverages by infusion or percolation, according to the invention. The machine is indicated as a whole with 10 and basically includes a boiler 12, which has a chamber 12a adapted to contain an infusion liquid to be heated, an infusion tank 14 which is adapted to receive a predetermined quantity of substance in powder form and has at least one opening 16 for dispensing the beverage obtained from the infusion of said substance in powder form, and a collecting vessel 18 adapted to receive the beverage dispensed from the infusion tank 14 through the opening 16.

In Figure 1, H indicates a heat source, which may be external to the machine or integrated into the machine and is adapted to transfer heat to the chamber 12a of the boiler 12 containing the infusion liquid to be heated. The heat source H may be a traditional or induction cooktop or a heating base adapted to be put in contact with a wall of the boiler 12.

Filtering means 22 are associated with the opening 16 of the infusion tank 14 and are arranged to retain the substance in powder form after the percolation of the infusion liquid therethrough.

The infusion tank 14 communicates with the boiler 12 through a circuit 20 for transporting the heated infusion liquid. The circuit 20 comprises a first circuit portion 20a, with the function of collector for the infusion liquid, immersed at least partially in the chamber 12a of the boiler 12. The circuit 20 also comprises a second portion 20b, with the function of cooling of the infusion liquid, which is formed in a wall of the machine body that is in heat exchange relationship with the external environment. More specifically, the second circuit portion 20b is formed in a perimetral or circumferential wall W of the collecting vessel 18 which separates the chamber 18a of that vessel from the external environment.

The second circuit portion 20b has a mass and a surface extension, per unit of volume, which determines its heat dissipation capacity. This circuit portion forms a heat exchanging circuit. The topology of the heat exchanging circuit is designed in such a way as to provide a heat exchange surface suitable for the transfer of a predetermined quantity of heat from the infusion liquid, depending on the expected temperature of the infusion liquid that flows through the circuit.

For example, the second circuit portion 20b is shaped according to gyroscopic geometries such as a triply periodic minimal surface, i.e., it includes at least one duct shaped according to a triply periodic minimal surface and comprises, for example, one or more gyroid structures, separated or communicating with each other, wherein the total heat exchange surface comprises the internal surface of the gyroid contacted by the infusion liquid and possibly the surface of a gyroid configuration, or in general of a triply periodic minimal geometry, obtained on a face of the wall W. In a variant embodiment, the second circuit portion 20b is formed by a channel or non-directional cavity of any shape. Therefore, the gyroid-shaped representation of Figure 1 is purely indicative and does not limit the scope of the invention.

A pressure release valve 30 is associated with the first circuit portion 20a, said pressure release valve being arranged upstream of the second circuit portion 20b and being adapted to control the pressure of the infusion liquid that enters the circuit 20 from the boiler 12. The pressure release valve 30 acts in such a way as to counteract the increasing force exerted by the infusion liquid inside the boiler 12 as the temperature increases during the heating process, said valve opening and allowing the flow of the infusion liquid in the first circuit portion 20a towards the infusion tank 14 when the pressure in the chamber 12a of the boiler 12 increases beyond a predetermined threshold (equivalent to the calibration value of the valve).

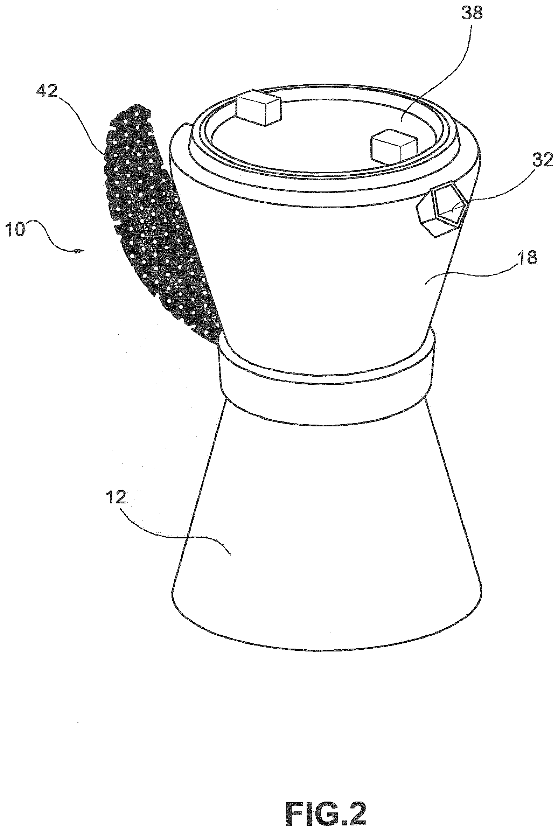

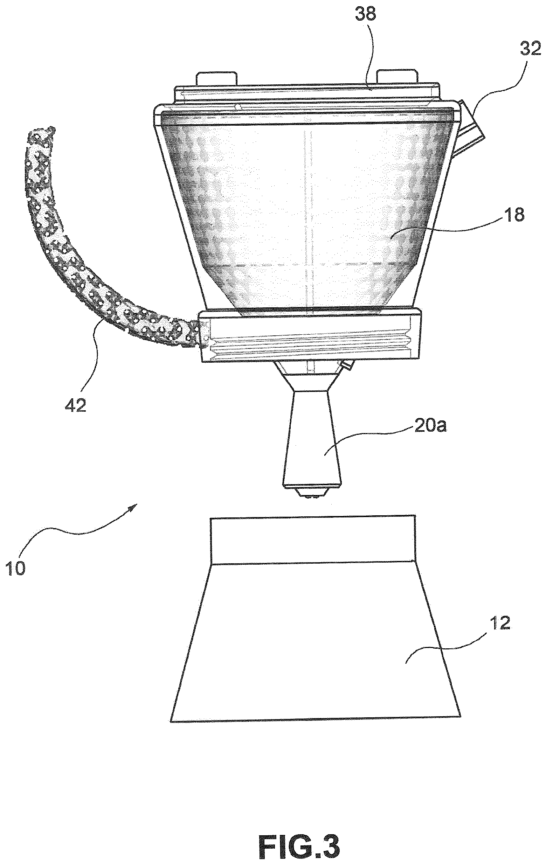

An embodiment of the machine of the invention is shown by way of example in Figures 2 and 3. This configuration recalls that of traditional thermo-mechanical extraction appliances for domestic use.

The machine 10 has an overall appearance and size similar to those of a traditional moka-type coffee maker, and comprises a lower body with a truncated cone or truncated pyramid shape and an upper body with a truncated cone or truncated pyramid shape, positioned upside down with respect to the lower body, said bodies being coupled to each other at their narrowest sections. The lower body houses the boiler 12, which is made, for example, of steel or aluminium, the first circuit portion 20a and the pressure release valve 30, while the upper body mainly houses the second circuit portion 20b, the collecting vessel 18, the infusion tank 14 and the respective filtering means 22. The infusion tank 14 may be adapted to receive a substance in incoherent powder form or a substance in compressed powder form, such as a tablet. A safety valve is associated with the boiler 12, although not shown. The upper body of the machine is connectable by screwing to the lower body with the interposition of at least one gasket to ensure a fluid-tight connection between the two bodies. The upper body of the machine further comprises a lid 38 adapted to close the collecting vessel 18 at its top. The collecting vessel 18 is provided with a dispensing spout 32, or other dispensing opening, for dispensing the beverage.

In the rest of the description and the claims, the term moka-type coffee maker is used broadly to indicate a machine for the preparation of hot coffee-based beverages and the like and, therefore, more generally for the preparation of infusions of substances other than coffee.

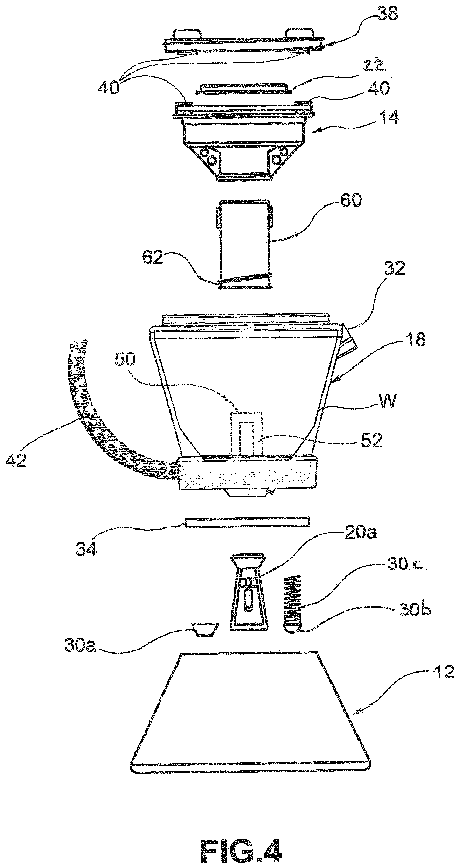

In Figure 4 the main components of the coffee maker of the invention are shown in exploded view.

The collecting vessel 18 has a chamber 18a adapted to receive the beverage produced by passing the infusion liquid through the substance in powder form contained in the infusion tank 14.

The first circuit portion 20a and the boiler 12 are shown below the collecting vessel 18. In this case, the first circuit portion 20a is formed by a duct, having for example a truncated cone shape, in which the pressure release valve 30 is housed. In the illustrated example, the pressure release valve 30 comprises a valve seat 30a, a closure member 30b cooperating with the valve seat 30a, and a spring 30c adapted to push the closure member 30b against the valve seat 30a to keep the latter in a normally closed state. Only when a predetermined pressure of the infusion liquid, heated in the boiler 12, is reached, the closure member 30b rises with respect to the valve seat 30a against the action of the spring 30c, thereby allowing the flow of the heated infusion liquid from the boiler 12 towards the infusion tank 14.

Advantageously, the first circuit portion 20a is removably coupled to the bottom of the collecting vessel 18, for example, through respective magnetic elements or mechanical coupling. This allows the coffee maker to be assembled with a pressure release valve having a specific calibration pressure, selected from a plurality of pressure release valves available with the coffee maker, each having a respective calibration pressure different from that of the other valves. This allows to configure the operating pressure of the coffee marker, i.e., the pressure that the infusion liquid reaches, which can therefore be adapted to the type of coffee-based beverage the user wants to obtain, for example, drip coffee, moka coffee, aeropress coffee or espresso coffee.

Reference 34 indicates a gasket provided between the collecting vessel 18 and the boiler 12 for the fluid-tight closure of the boiler 12.

The infusion tank 14 adapted to receive a predetermined quantity of substance in powder form is shown above the collecting vessel 18. The infusion tank 14 is, for instance, arranged near the top of the chamber 18a of the collecting vessel 18. The infusion tank 14 communicates with the chamber 18a of the collecting vessel 18 through the aforementioned filtering means 22, which are adapted to retain the residues of the substance in powder form contained in the infusion tank during the infusion or percolation process. In the illustrated embodiment, the infusion tank 14 has a cylindrical shape, but it may take alternative shapes as long as they are compatible with its positioning; for example, it may have a toroidal configuration.

The lid 38 of the coffee maker is adapted to engage, for example by screwing, the upper edge of the collecting vessel 18, and to be removably coupled, for example by magnetic retaining means 40, with the infusion tank 14. The lid 38 includes, for example, a main body of steel or aluminium and a plastic insert which is mechanically coupled to the main body and is easily replaceable, for example a decorative insert adapted to allow an aesthetic customization of the coffee maker.

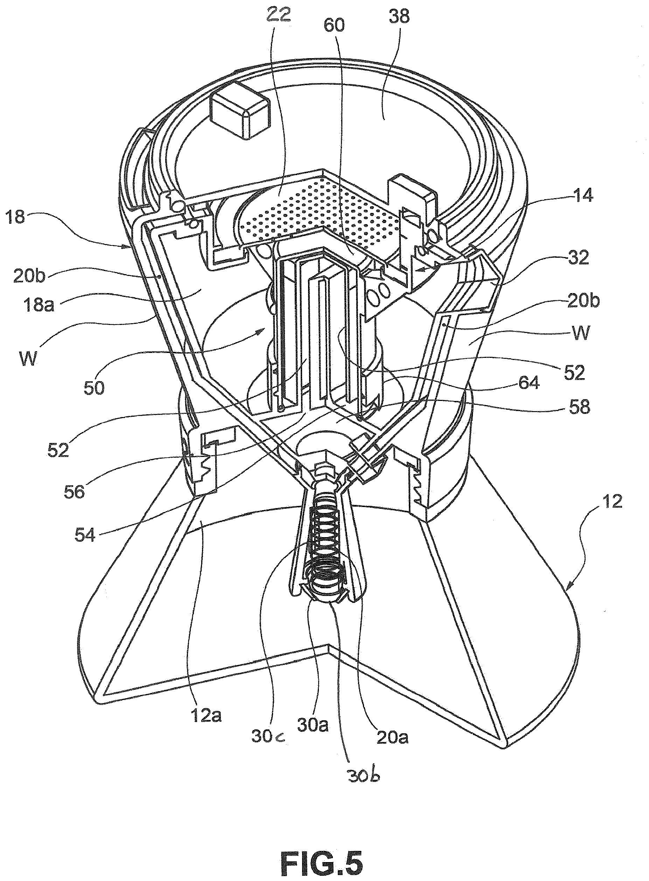

A handle 42 is coupled to the collecting vessel 18, for example by means of a magnetic adhesion mechanism, a mechanical coupling mechanism or a combination thereof. Advantageously, the wall W of the collecting vessel 18 is provided with a suitable seat to allow the coupling with the handle 42, characterized by a protective flange aimed at avoiding direct contact of the handle with the convective motions of the hot air generated when the coffee maker is used on a gas cooktop or over an open flame. Advantageously, in this way, the handle 42 can be removed when the coffee maker is exposed to a heat source and attached again thereto to handle the coffee maker and pour the beverage. As shown in Figure 5, the boiler 12 is in fluid communication with the infusion tank 14 through the circuit 20, which, as mentioned, comprises the first circuit portion 20a, extending into the chamber 12a of the boiler 12, and the second circuit portion 20b, formed in the wall W of the collecting vessel 18.

The infusion tank 14 is preferably arranged near the top of the chamber 18a of the collecting vessel 18, so as to be in communication with the second circuit portion 20b to receive the infusion liquid, cooled to the ideal temperature, when the lid 38 is arranged in a closed position in which it closes the chamber 18a of the collecting vessel 18.

The second circuit portion is formed as a channel formed in one piece with the wall W of the collecting vessel 18. More specifically, the second circuit portion 20b is made as a cavity within the thickness of the wall W of the collecting vessel 18 and has the shape of a hollow circumferential cavity, that is, the internal surface structure of a gyroid. This cavity preferably extends for the entire height of the wall W of the collecting vessel 18, and opens at its top into the region of the chamber 18a of the collecting vessel 18, where the infusion tank 14 is arranged in the assembled condition of the coffee maker, or - in an alternative embodiment - into a region of the lid 38 provided with a respective channel forming a further circuit portion for the cooling of the infusion liquid, which finally opens into the infusion tank 14.

The second circuit portion 20b and the outer face of the wall W of the collecting vessel 18 have topological characteristics suitable for increasing the dissipation surface and may therefore have more complex shapes than those illustrated here by way of example: for instance, these topologies may be derived from the TPMS (Triply Periodic Minimal Surface) functions already mentioned and therefore have a gyroscopic (or other TPMS) configuration. The depicted structures are representative and non-exhaustive examples of the possible geometric configurations.

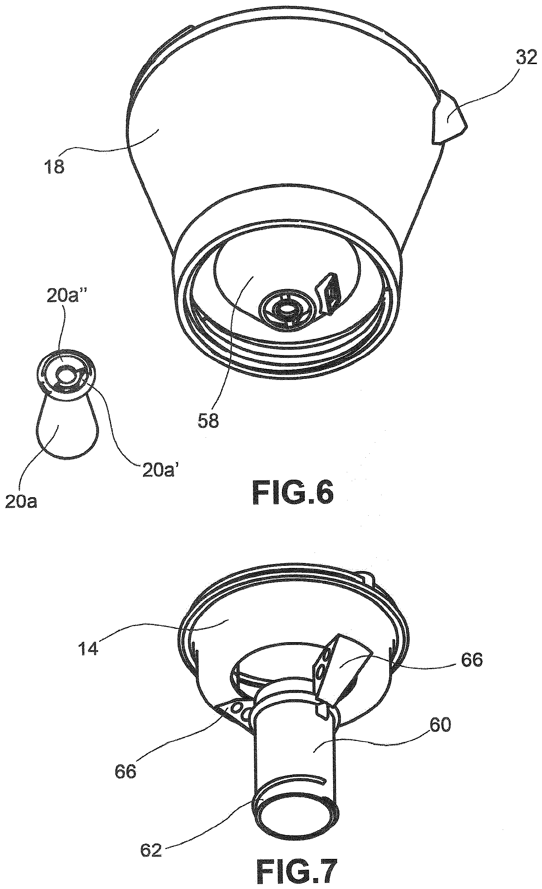

The pressure release valve 30 is adapted to prevent the infusion liquid from rising into the first circuit portion 20a until a predetermined pressure is reached in the boiler 12 (pressure corresponding to the calibration pressure of the valve 30). Once said pressure has been reached, the infusion liquid flows through the first circuit portion 20a and reaches the second circuit portion 20b, where it releases the excess heat. Advantageously, the first circuit portion 20a has a plurality of separate sectors, which are adapted to selectively enter into fluid communication with the chamber 12a of the boiler 12 due to the opening of respective pressure release valves (not shown), each having a respective calibration pressure. Figure 6 shows an open sector 20a' and a closed sector 20a", respectively.

Correspondingly, the second circuit portion 20b advantageously has a plurality of separate cooling regions having respective masses, flow passage sections and surface extensions per unit of volume, determining their heat dissipation capacity. These separate regions are each in fluid communication with a corresponding sector of the first circuit portion 20a.

Depending on the calibration of the pressure release valves, the various sectors of the first circuit portion 20a can be selectively opened or closed so as to allow the infusion liquid to flow out of the boiler 12 through one or more of them.

Since a given temperature of the infusion liquid will be expected depending on the calibration pressure of the pressure release valves 30, each cooling region of the second circuit portion 20b formed in the wall W of the collecting vessel 18 offers thermo-mechanical and fluid-dynamic characteristics consistent with the desired percolation values. Each cooling region, in fact, conveys the infusion liquid towards the infusion tank 14 and, along the way, optimizes the heat exchange and guarantees the minimization of the pressure drop. Consequently, percolation takes place at controlled values of both temperature and pressure.

The shape and dimensions of the second circuit portion 20b, acting as a heat exchanger, are designed according to the expected temperature of the infusion liquid heated by the boiler 12, which depends on the calibration pressure of the pressure release valve 30, and the desired infusion temperature, typically between 85°C and 95°C. More generally, they may be configured and implemented in a customized way during the production phase of the machine based on the preferences expressed by the individual consumer, therefore based on the desired thermodynamic balances (temperature, pressure) resulting from the desired quantity of infusion liquid - i.e. the volume of the chamber 12a of the boiler 12 - and the quantity of substance in powder form - i.e. the volume of the infusion tank 14 - that characterize the machine.

The coffee maker of the invention further comprises dosing means associated with the collecting vessel 18, which advantageously allow the pouring of a predetermined quantity of infusion liquid into the collecting vessel 18 during the preparation of the beverage, without the need to uncouple the boiler 12 therefrom and load the infusion liquid directly into the boiler.

For this purpose, the dosing means 50 include a supply conduit 52 for feeding the infusion liquid into the boiler 12. The supply conduit 52 is configured to selectively put the chamber 18a of the collecting vessel 18 in fluid communication with the chamber 12a of the boiler 12, to selectively transfer a predetermined quantity of infusion liquid from the chamber 18a of the collecting vessel 18 to the chamber 12a of the boiler 12. The supply conduit 52 has an inlet opening 54, arranged near the bottom of the chamber 18a of the collecting vessel 18, for allowing inflow of the infusion liquid, and an outlet opening 56, in communication with the chamber 12a of the boiler 12, for example through an intermediate funnel-shaped chamber 58 formed at the bottom of the collecting vessel 18, for allowing outflow of the infusion liquid.

The inlet opening 54 and the outlet opening 56 of the supply conduit 52 are connected to each other by a siphon-shaped channel, which extends from the bottom of the chamber 18a of the collecting vessel 18 up to a predetermined height that is adapted to define a predetermined quantity of infusion liquid. Specifically, the siphon-shaped channel comprises an ascending section, mainly vertical, which extends upwards from the inlet opening 54 until it reaches an inverted U-shaped inversion portion placed at a predetermined height, and a descending section, which is also mainly vertical and extends from the inversion portion to the outlet opening 56. This configuration causes the infusion liquid, poured into the chamber 18a of the collecting vessel 18, to flow into the ascending section of the siphon-shaped channel, reaching the same level as the infusion liquid inside the chamber 18a of the collecting vessel 18, according to the well-known principle of communicating vessels. When the infusion liquid poured into the chamber 18a of the collecting vessel 18 - and therefore into the siphon-shaped channel - reaches the peak of the inverted U-shaped inversion portion, due to the hydrostatic pressure that is established within the siphon-shaped channel, the infusion liquid flows into the descending section of the siphon-shaped channel, thereby leading to the complete emptying of the chamber 18a of the collecting vessel 18 via the outlet opening 56, from which the infusion liquid finally reaches the chamber 12a of the boiler 12.

The siphon-shaped channel of the supply conduit 52 extends, according to the embodiment shown in the drawings, within the chamber 18a of the collecting vessel 18, but may alternatively extend within the wall W of the collecting vessel 18 in a region of the wall separated from the second circuit portion 20b, and not communicating with it. In the embodiment shown in the drawings, the siphon-shaped channel of the supply conduit 52 is flexible, and an adjustment member 60 is associated with it to determine the height from the bottom of the chamber 18a of the collecting vessel 18 up to where the siphon-shaped channel extends.

The adjustment member 60 has a cup-shaped body, adapted to fit on the dosing means 50 and to be releasably coupled - e.g. by screwing - through a lower edge 62 thereof having a retaining seat 64 - e.g. a threaded flange - at the bottom of the chamber 18a of the collecting vessel 18, in a first operating position in which the body of the adjustment member 60 does not obstruct the inlet opening 54 and the bottom wall of the body of the adjustment member 60 acts on the siphon-shaped channel, delimiting its height extension from the bottom of the chamber 18a of the collecting vessel 18.

Different adjustment members may be advantageously provided, each having the same external height, yet different internal heights due to different thicknesses of the bottom of the body. These adjustment members act on the inverted U-shaped inversion portion of the siphon-shaped channel, each establishing a respective height of the siphon-shaped channel from the bottom of the chamber 18a of the collecting vessel 18 and, therefore, adjusting the quantity of infusion liquid in the chamber 18a of the collecting vessel 18 which reaches the level corresponding to the apex of the inverted U-shaped inversion portion of the siphon-shaped channel before flowing into the chamber 12a of the boiler 12.

The adjustment member 60 is adapted to be coupled to the lid 38 of the coffee maker, for example, indirectly through the infusion tank 14 that is mechanically coupled with it by screwing or press-fit, as shown in Figure 7, between a pair of opposite retaining formations 66 protruding from the bottom of the infusion tank 14 according to an arrangement that avoids hindering the dispensing of the beverage.

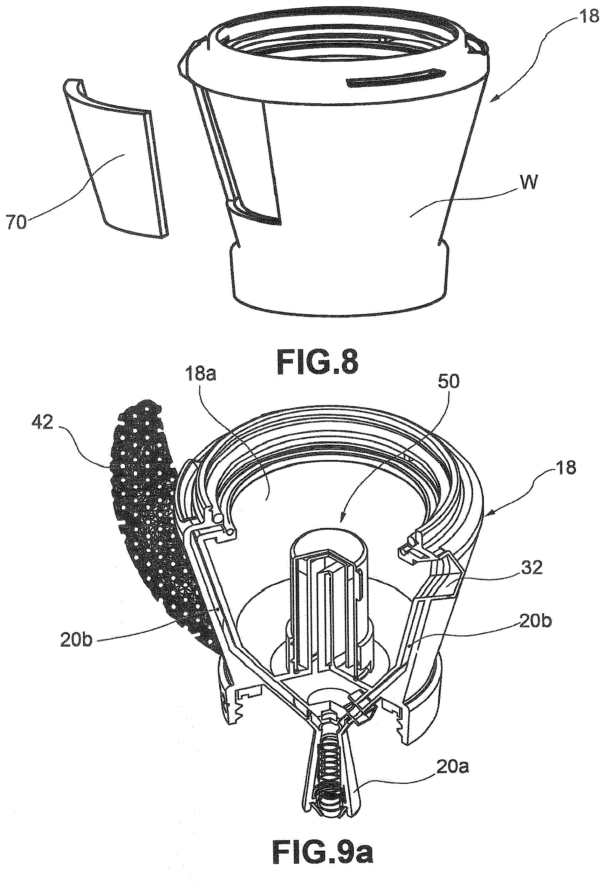

The adjustment member 60 is adapted to take a second operating position in which its body closes the inlet opening 54, when the lid 38 is arranged in a closed position in which it closes the chamber 18a of the collecting vessel 18. This occurs as a result of the complete insertion of the body of the adjustment member 60 into the retaining seat 64 up to the bottom of the chamber 18a of the collecting vessel 18, which is a consequence of the operation of screwing the lid 38 to the top of the collecting vessel 18, which pushes downwards the infusion tank 14 coupled to it, which in turn engages the adjustment member 60. This arrangement ensures that, when the coffee maker is closed by screwing the lid 38, the inlet opening 54 of the supply conduit 52 is closed, thereby interrupting the fluid communication between the collecting vessel 18 and the boiler 12. In a further improved embodiment, shown in Figure 8, an outer region 70 of at least a portion of the wall W of the collecting vessel 18, preferably corresponding to one of the cooling regions of the second circuit portion 20b, is removable, as it is for example coupled to the remaining part of the wall W of the collecting vessel 18 by screws or equivalent fastening means. The purpose is to allow to change some of the parameters of the coffee maker, such as, for example, the mass or the portion of external triply periodic minimal surface, but also to replace directly this cooling region.

The procedure for preparing a hot beverage (for example, espresso coffee) and operating the machine of the invention is described below with reference to Figures 9a-9f, which show - only with the detail of the upper body of the machine - respectively:
(a) the configuration of the machine for the desired beverage;
(b) the dosing of the infusion liquid into the collecting vessel;
(c) the positioning of the infusion tank containing the substance in powder form to be infused;
(d) the screwing of the lid to fluid-tightly close the collecting vessel;
(e) the boiling of the infusion liquid and its transportation to the infusion tank;
(f) the infusion of the substance in powder form and the percolation of the beverage into the collecting vessel.

The machine of the invention is configurable and its configuration takes place by assembling the first circuit portion 20a carrying the pressure release valve 30 - selected according to the type of desired beverage - to the upper body, in particular to the bottom of the collecting vessel 18 (Figure 9a).

The machine is then loaded after assembling the lower body with the upper body, in particular the boiler 12 with the collecting vessel 18.

The preparation of the machine takes place in two phases, namely the loading of the infusion liquid L into the boiler 12 and the loading of the substance P in powder form into the infusion tank 14. Both these phases are carried out by acting exclusively on the collecting vessel 18.

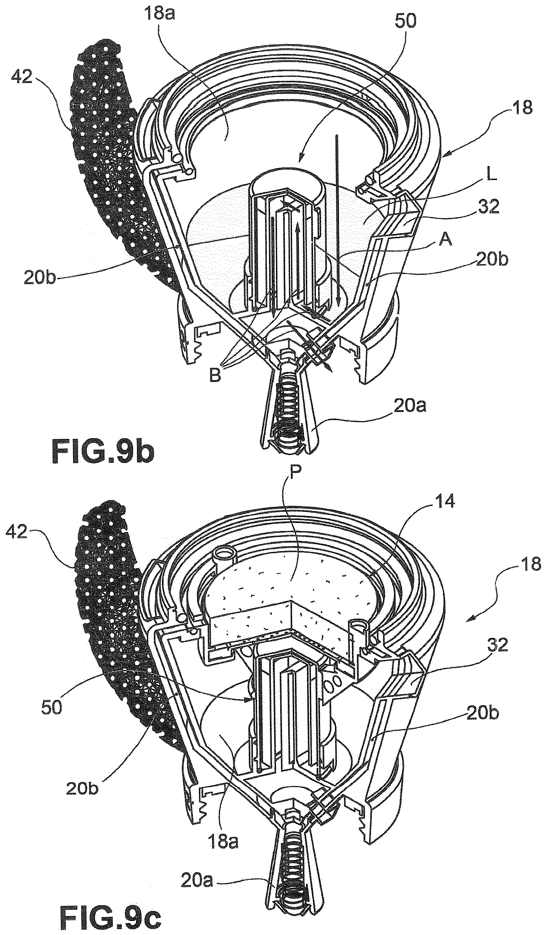

Specifically, first the lid 38 of the collecting vessel 18 is removed to allow the infusion liquid L (for example, water) to be loaded into the collecting vessel 18 (indicated by arrow A in Figure 9b) up to the level determined by the dosing means, which are also possibly selected, when the machine is configured, in order to dispense a certain quantity of beverage. Once this level has been reached, the infusion liquid L automatically flows into the boiler 12 (as indicated by arrows B in Figure 9b).

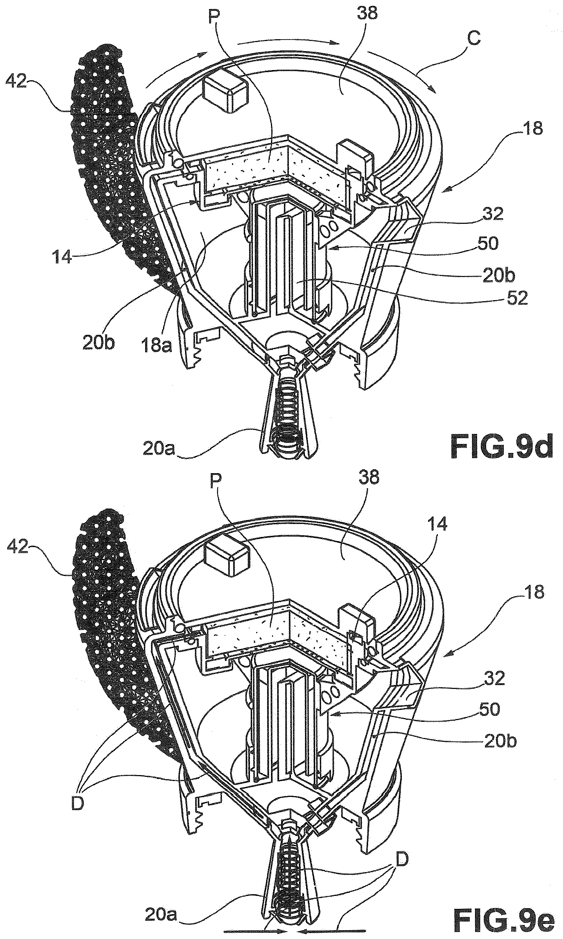

The operation of loading the substance P in powder form into the infusion tank 14 may be conveniently carried out when the latter is separated from the machine, by depositing a predetermined quantity of the substance in powder form to be infused or an already portioned tablet of the substance to be infused. The lid 38 is then coupled to the filled infusion tank 14, for example through the magnetic retaining means 40, and the assembly formed by the infusion tank 14 and the lid 38 is placed in its seat at the top of the collecting vessel 18 (Figure 9c), then the lid 38 (arrows C in Figure 9c) is screwed to reach a fluid-tight closed condition of the collecting vessel 18. In this way, the screwing of the lid 38 of the collecting vessel 18 causes the consequent closure of the circuit 20, preventing any backflow of the heated infusion liquid directly into the collecting vessel 18 as well as any possible outflow of the prepared beverage from the collecting vessel 18 to the boiler 12 (Figure 9d).

When the machine is placed on a heat source for the time needed to complete a beverage preparation cycle, according to the operation of the traditional moka-type coffee maker, the heat source heats a wall (for example, the lower wall in the case of a cooktop) of the boiler 12 and this latter, in turn, transmits the heat to the infusion liquid contained in the chamber 12a of the boiler 12 and to the air in this chamber.

This can occur because the boiler 12 is adapted to absorb thermal energy from a cooktop or an associated heating base or generate thermal energy by induction from a cooktop or an associated heating base with which the boiler 12 comes into contact through one of its walls.

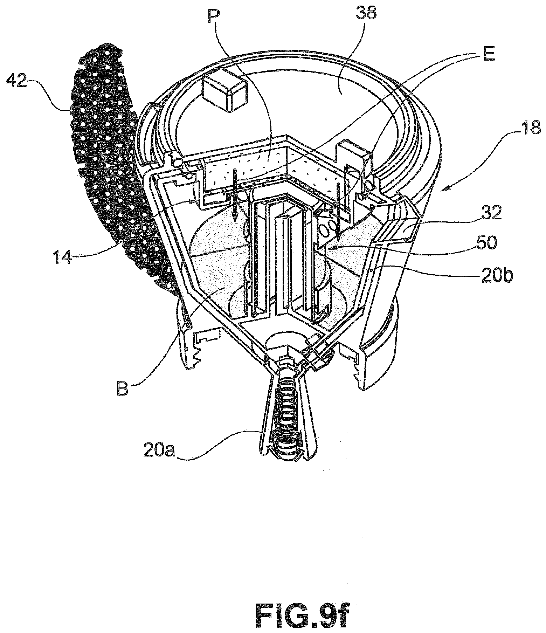

The infusion liquid is heated until it reaches its boiling point, and due to the effect of the temperature increase, the air inside the boiler 12 expands, assisted by the steam released by the boiling infusion liquid. The increasing pressure pushes the infusion liquid towards the first circuit portion 20a, where the pressure release valve 30 blocks it until the calibration pressure of the valve is reached. Once this pressure has been reached, the pressure release valve 30 allows the infusion liquid to flow into the first circuit portion 20a and the subsequent second circuit portion 20b. The infusion liquid is cooled as it flows through the second circuit portion 20b, and then flows into the infusion tank 14 at the desired temperature (arrows D in Figure 9e). Finally, the infusion or beverage B thus obtained passes through the dispensing opening 16 of the infusion tank 14 and then flows into the collecting vessel 18 (arrows E in Figure 9f), from which it can be poured directly into the consumer's cup through the dispensing spout 32.

The operation of emptying and cleaning of the machine, which is carried out after the beverage has been completely poured, can be easily carried out by removing the lid 38 of the collecting vessel 18 and separating the infusion tank 14 from it, which can then be discharged to dispose the exhausted residue of the infused substance.

As can be seen from the foregoing description, the invention achieves its objects thanks to the design possibilities offered by the additive manufacturing or 3D printing technology and to the possibilities of configuration of the pressure release valves and of the cooling regions of the second circuit portion, as well as of the dosing means.

Nowadays, the increasing availability of materials and the lowering of the production costs make it possible not only an indirect use of the technology, such as for example the possibility to have complex functional prototypes in very competitive times and costs or the possibility to produce complex (and better performing) moulds for traditional production processes, but also make economically convenient a direct use of the technology for the direct "printing" of the product or a part thereof. In this scenario, it is possible to customize the product to meet specific needs, even of individual consumers. In detail, by varying the geometry of the second circuit portion depending on the main volumetric parameters (the dosed quantity of infusion liquid and the quantity of the substance to be infused, i.e. the volume of the infusion tank) and on the calibration pressure values of the pressure release valve, it is possible to offer a customization of the extraction process that reflects the preferences of the consumer (for example, obtaining an "Americano" type of coffee, or a "moka" type coffee or an "espresso" type coffee or other combinations). In addition, such a made-to-order production model opens up significant aesthetic customization options, even of a single product, for example in connection with the handle or the surface of the lid. By defining the extractive characteristics of the machine, including the quantity of substance, the quantity of infusion liquid, and the desired extraction pressure, based on the individual consumers' preferences, it will be possible to produce, starting from any bounding shape, geometries that (depending on the material used) provide a total dissipative capacity able to guarantee that the temperature of the infusion liquid, upon percolation, is always within optimal values.

Naturally, the principle of the invention as defined in the attached claims remaining unchanged, the embodiments and details of construction may be widely varied with respect to what has been described and illustrated purely by way of non-limiting example. In particular, even if the invention has been described here with reference to an embodiment that includes both the connection circuit between the boiler and the infusion tank, comprising a circuit portion formed in the perimetral or circumferential wall of the collecting vessel to allow the cooling of the infusion liquid, and the dosing means provided with a siphon-shaped channel for transferring a predetermined quantity of infusion liquid from the chamber of the collecting vessel to the chamber of the boiler, these latter might also be provided separately with respect to the aforementioned circuit portion formed in the perimetral or circumferential wall of the collecting vessel to allow the cooling of the infusion liquid. Therefore, the subject-matter of the present invention also relates to a moka-type coffee maker for the preparation of hot beverages by infusion or percolation, comprising:
- a boiler having a chamber adapted to contain an infusion liquid to be heated;
- an infusion tank adapted to receive a predetermined quantity of substance in powder form; and
- a collecting vessel having a chamber adapted to receive the beverage produced by passing the heated infusion liquid through the substance in powder form,
   wherein the boiler, the infusion tank and the collecting vessel are adapted to be coupled with each other in a condition of use of the coffee maker, and
   wherein the coffee maker further comprises dosing means adapted to dose a predetermined quantity of infusion liquid into the boiler, said dosing means including a supply conduit adapted to selectively put the chamber of the collecting vessel in fluid communication with the chamber of the boiler for selectively transferring said predetermined quantity of infusion liquid from the chamber of the collecting vessel to the chamber of the boiler, the supply conduit having an inlet opening arranged in a bottom region of the chamber of the collecting vessel and an outlet opening communicating with the chamber of the boiler, said inlet and outlet openings being connected to each other by a siphon-shaped channel extending to a predetermined height with respect to the bottom of the chamber of the collecting vessel, which height is adapted to define said predetermined quantity of infusion liquid.

## Claims

1. A moka-type coffee maker (10) for the preparation of hot beverages by infusion or percolation, comprising:
- a boiler (12) having a chamber (12a) adapted to contain an infusion liquid to be heated;
- an infusion tank (14) adapted to receive a predetermined quantity of substance in powder form; and
- a collecting vessel (18) having a chamber (18a) adapted to receive the beverage produced by passing the heated infusion liquid through the substance in powder form, wherein the boiler (12), the infusion tank (14) and the collecting vessel (18) are adapted to be coupled together in a condition of use of the coffee maker (10), and
wherein, in said condition of use of the coffee maker (10), the boiler (12) is in fluid communication with the infusion tank (14) through a circuit (20) for the transport of the infusion liquid, said circuit (20) comprising a first circuit portion (20a) which extends in the chamber (12a) of the boiler (12) and carries associated pressure release valve means (30) adapted to open said first circuit portion (20a) upon reaching a predetermined pressure of the infusion liquid heated in the boiler (12), and a second circuit portion (20b) in fluid communication with said first circuit portion (20a); **characterized in that** said second circuit portion (20b) is formed in a perimetral or circumferential wall (W) of the collecting vessel (18) which is in heat exchange relationship with the external environment to allow the cooling of the heated infusion liquid which flows through said second circuit portion (20b); and
**in that** it further comprises dosing means (50) adapted to dispense a predetermined quantity of infusion liquid into the boiler (12), said dosing means (50) including a supply conduit (52) adapted to selectively put the chamber (18a) of the collecting vessel (18) into fluid communication with the chamber (12a) of the boiler (12) to selectively transfer said predetermined quantity of infusion liquid from the chamber (18a) of the collecting vessel (18) to the chamber (12a) of the boiler (12), the supply conduit (52) having an inlet opening (54) arranged in a bottom area of the chamber (18a) of the collecting vessel (18) and an outlet opening (56) communicating with the chamber (12a) of the boiler (12), said inlet and outlet openings (54, 56) being connected to each other by a siphon-shaped channel extending to a predetermined height with respect to the bottom of the chamber (18a) of the collecting vessel (18), which height is adapted to define said predetermined quantity of infusion liquid.

2. Coffee maker according to claim 1, wherein the infusion tank (14) is arranged close to the top of the chamber (18a) of the collecting vessel (18) in fluid communication with said second circuit portion (20b), and has at least one dispensing opening (16) in communication with the chamber (18a) of the collecting vessel (18) through filtering means (22) adapted to retain the powder of the substance to be infused, for dispensing the beverage obtained from the infusion of said substance.

3. Coffee maker according to claim 1 or claim 2, further comprising a closing lid (38) for closing the collecting vessel (18), the closing lid (38) being adapted to be removably coupled to the infusion tank (14) in such a way that, when the closing lid (38) is arranged in a position in which it closes the chamber (18a) of the collecting vessel (18), the infusion tank (14) is arranged in communication with said second circuit portion (20b) to receive the infusion liquid.

4. Coffee maker according to claim 3, wherein the closing lid (38) comprises a further circuit portion for cooling the infusion liquid, which is in fluid communication on one side with said second circuit portion (20b) and on the other side with said infusion tank (14).

5. Coffee maker according to any one of the preceding claims, wherein said siphon-shaped channel extends within the chamber (18a) of the collecting vessel (18).

6. Coffee maker according to claim 5, wherein said siphon-shaped channel is a flexible channel.

7. Coffee maker according to claim 6, further comprising an adjusting member (60) aimed at regulating said dosing means (50), said adjusting member (60) being adapted to determine the height from the bottom of the chamber (18a) of the collecting vessel (18) up to which said siphon-shaped channel extends.

8. Coffee maker according to claim 7, wherein said adjusting member (60) has a cup-shaped body fitted on said dosing means (50) and removably coupled at an edge (62) thereof with a retaining seat (64) at the bottom of the chamber (18a) of the collecting vessel (18) in a first operating position, in which said cup-shaped body does not close the inlet opening (54) of the supply conduit (52) of said dosing means (50) and the bottom wall of said body acts on the siphon-shaped channel of said dosing means (50) delimiting its extension in height from the bottom of the chamber (18a) of the collecting vessel (18).

9. Coffee maker according to claim 3 and claim 8, wherein the adjusting member (60) is adapted to be coupled to the closing lid (38) and to take a second operating position, in which the body of the adjusting member (60) closes the inlet opening (54) of the supply conduit (52) of said dosing means (50) when the closing lid (38) is arranged in a position in which it closes the chamber (18a) of the collecting vessel (18).

10. Coffee maker according to any one of claims 1 to 4, wherein said siphon-shaped channel extends within said wall (W) of the collecting vessel (18).

11. Coffee maker according to any one of the preceding claims, wherein said first circuit portion (20a) is removably coupled to the bottom of the collecting vessel (18).

12. Coffee maker according to claim 11, wherein said second circuit portion (20b) extends from the bottom to the top of the collecting vessel (18).

13. Coffee maker according to any one of the preceding claims, wherein said second circuit portion (20b) includes at least one duct shaped according to a triply periodic minimal surface.

14. Coffee maker according to any one of the preceding claims, wherein said first circuit portion (20a) has a plurality of separate ducts, which are adapted to selectively enter into fluid communication with the chamber (12a) of the boiler (12) as a result of the opening of said pressure release valve means (30) upon respective different pressure values of the infusion liquid that are established in the chamber (12a) of the boiler (12).

15. Coffee maker according to claim 14, wherein said second circuit portion (20b) has a plurality of separate cooling regions, of which at least one is preferably removable, said separate cooling regions having respective predetermined mass, flow passage section and surface extension per unit of volume, which determine their thermal dissipation capacity, and being each placed in communication with a respective duct of said first circuit portion (20a).
